# EUROPÄISCHE PATENTSCHRIFT

(11) **EP 2 976 238 B1**
(45) Veröffentlichungstag und Bekanntmachung des Hinweises auf die Patenterteilung: **08.05.2019**
(21) Anmeldenummer: 14701571.3
(22) Anmeldetag: 29.01.2014
(51) Int. Cl.: B60T 7/22

(54) **VERFAHREN UND SYSTEM ZUR VERMEIDUNG EINER KOLLISION IM ZUSAMMENHANG MIT FAHRZEUGEN**
METHOD AND SYSTEM FOR AVOIDING A COLLISION IN CONNECTION WITH VEHICLES
PROCÉDÉ ET SYSTÈME PERMETTANT D'ÉVITER UNE COLLISION EN RELATION AVEC DES VÉHICULES

(30) Priorität: 20.03.2013 DE 102013204893
(43) Veröffentlichungstag der Anmeldung: 27.01.2016
(73) Patentinhaber: Robert Bosch GmbH, 70442 Stuttgart (DE)
(72) Erfinder: BUNK, Michael, 74211 Leingarten (DE)
(86) Internationale Anmeldenummer: PCT/EP2014/051674
(87) Internationale Veröffentlichungsnummer: WO 2014/146814

(56) Entgegenhaltungen:
- EP-A2- 1 418 104
- DE-A1- 4 302 541
- DE-A1-102004 056 120
- DE-A1-102004 058 814
- DE-A1-102005 025 510

## Beschreibung

Die vorliegende Erfindung betrifft ein Verfahren und System zur automatischen Vermeidung einer Kollision im Zusammenhang mit Fahrzeugen, insbesondere zwischen Fahrzeugen und außerhalb des Fahrzeuges befindlichen Personen und/oder Objekten, aber auch zwischen zwei oder mehreren Fahrzeugen.

### Stand der Technik

Zukünftige Fahrerassistenzsysteme nutzen immer mehr Umgebungsinformationen durch Radar, Ultraschall, Kameras, usw., so dass eine Vielzahl möglicher Fahrassistenzfunktionen ermöglicht werden, die den Fahrer in kritischen Fahrsituationen unterstützen, um entweder den Fahrer und/oder die Fahrzeuginsassen zu schützen, oder aber andere Verkehrsteilnehmer nicht zu Schaden kommen zu lassen.

Die Kundenakzeptanz solcher Fahrassistenzsysteme steht und fällt mit den im Fahrzeug zur Verfügung stehenden Aktuatoren, die entsprechend des aktuellen Fahrzustandes bzw. Fahrsituation verschiedene Fahrzeugreaktionen einleiten, z.B. eine automatisierte Notbremsung zur Vermeidung einer Auffahrunfalls, oder aber zur Vermeidung eines Zusammenstoß mit einem Fußgänger.

Eingriffe in den aktuellen Fahrbetriebszustand eines Fahrzeugs können vielfältig geschehen. So besteht die Möglichkeit verschiedene Elemente des Fahrwerks, des Antriebsstrangs, der Lenkung oder der Bremse durch ein Steuergerät anzusteuern. Zur Kollisionsvermeidung kann weiter unterschieden werden in Eingriffe, die die Geschwindigkeit des Fahrzeugs reduzieren, oder aber Eingriffe, die zusätzlich auch die Fahrtrichtung ändern.

Speziell bei Bremseingriffen steht und fällt das Potential eines Eingriffs mit der zur Verfügung stehenden Druckaufbaudynamik, für komfortorientierte Funktionen zusätzlich mit dem resultierenden Geräusch der verwendeten Aktuatoren (wie es beispielsweise von einem herkömmlichen ESP/ABS-System bekannt sein dürfte).

Speziell Druckaufbauten durch die Kolbenpumpe einer ESP-Hydraulik bieten hierbei nicht-ausreichende Druckaufbaugradienten, und erzeugen zusätzlich erhebliche Geräusche durch die hydraulische/mechanische Anbindung an das Fahrzeug.

Druckschrift DE 10 2012 104 793 A1 offenbart ein Kollisionsvermeidungssystem, welches eine automatische Lenkkontrolle unter Verwendung von differentiellem Bremsen in dem Fall bereitstellt, dass die normale Lenkkontrolle eines so genannten Hauptfahrzeugs ausfällt. Das System ermittelt, ob eine Kollision mit einem Objekt, wie zum Beispiel einem anderen Fahrzeug oder auch einer Person, bevorsteht, und, falls ja, ermittelt einen optimalen Pfad für das Hauptfahrzeug zum Entlangfahren, um dem Objekt im Falle einer sonst möglichen Kollision auszuweichen. Das Kollisionsvermeidungssystem kann ermitteln, dass ein automatisches Lenken erforderlich ist, um das Fahrzeug zu veranlassen, dem optimalen Pfad zu folgen, um dem (Kollisions-) Ziel auszuweichen. Falls das Kollisionsvermeidungssystem ermittelt, dass ein automatisches Lenken erforderlich ist, und ermittelt, dass ein normales Fahrzeug-Lenken ausgefallen ist, verwendet das System differentielles Bremsen, um das Fahrzeug entlang des Pfads zu lenken.

Kollisionsvermeidungssysteme bzw. -Verfahren, die elektromechanische Bremskraftverstärker einsetzten, gemäß dem Oberbegriff des unabhängigen Ansprüche 1 und 8 sind zum Beispiel in den Druckschriften DE 10 2004 058814 A1, DE 10 2004 056120 A1, DE 10 2005 025510 A1 offenbart.

Der Erfindung liegt die Aufgabe zugrunde, die bekannten Systeme und Verfahren zur Vermeidung von Kollisionen weiter zu verbessern.

### Offenbarung der Erfindung

Die Aufgabe wird durch die Merkmale der unabhängigen Ansprüche 1 und 8 gelöst.

Die Erfindung schlägt unter einem ersten Aspekt gemäß Anspruch 1 ein Verfahren zur Vermeidung einer Kollision eines sich bewegenden Fahrzeuges mit wenigstens einem Objekt, welches in einen möglichen Kollisionsbereich während der Fahrzeugbewegung eintritt und/oder sich befindet, wobei das Fahrzeug umfasst: eine Sensoreinrichtung zur Erfassung des wenigstens einen Objektes, wobei die Sensoreinrichtung wenigstens einen Kollisionsbereich überwacht, welcher sich im Umfeld des Fahrzeuges befindet; einen elektromechanischen Bremskraftverstärker und damit gekoppelte Bremskraft-regelnde Komponenten, welche in betrieblicher Weise in ein Fahrzeug-Bremssystem zum Abbremsen des Fahrzeuges integriert sind; eine Steuereinrichtung, welche Signale von der Sensoreinrichtung empfängt, und auf Grundlage dieser Signale den Bremskraftverstärker und die Bremskraft-regelnden Komponenten und/oder weitere aktive Fahrwerkskomponenten steuert; und wobei das Verfahren bei Erfassen wenigstens eines Objektes eine Fahrgeschwindigkeit und/oder Fahrtrichtung des Fahrzeugs derart mit Hilfe der Steuereinrichtung in Verbindung mit dem Bremssystem und den Bremskraft-regelnden Komponenten ändert, so dass eine Kollision mit dem wenigstens einen Objekt automatisch vermieden wird.

Unter einem zweiten Aspekt gemäß Anspruch 8 schlägt die Erfindung ein Kollisionsvermeidungssystem für ein Fahrzeug vor, wobei das Kollisionsvermeidungssystem umfasst: eine Sensoreinrichtung zur Erfassung wenigstens eines Objektes, welches in wenigstens einen möglichen Kollisionsbereich während einer Fahrzeugbewegung eintritt und/oder sich befindet, wobei sich der von der Sensoreinrichtung überwachte wenigstens eine Kollisionsbereich im Umfeld des Fahrzeuges befindet; einen elektromechanischen Bremskraftverstärker und damit über ein Hydraulikfluid gekoppelte Bremskraft-regelnde Komponenten, welche in betrieblicher Weise in ein Fahrzeug-Bremssystem zum Abbremsen des Fahrzeuges integriert sind; eine Steuereinrichtung, welche Signale von der Sensoreinrichtung empfängt, und auf Grundlage dieser Signale den Bremskraftverstärker und die Bremskraft-regelnden Komponenten und/oder weitere aktive Fahrwerkskomponenten steuert; und wobei das Kollisionsvermeidungssystem bei Erfassen des wenigstens einen Objektes eine Fahrgeschwindigkeit und/oder Fahrtrichtung des Fahrzeugs derart mit Hilfe der Steuereinrichtung in Verbindung mit dem Bremssystem und den Bremskraft-regelnden Komponenten ändert, so dass eine Kollision mit dem wenigstens einen Objekt automatisch vermeidbar ist.

### Vorteile der Erfindung

Der Vorteil der Erfindung ergibt sich daraus, dass durch die Nutzung eines herkömmlichen elektromechanischen Bremskraftverstärkers (eines so genannten "iBoosters") in Verbindung mit einem unterlagerten ESP-Aggregat nun die Möglichkeit besteht, dem Fahrzeug ein unsymmetrisches Bremsmoment aufzuprägen, welches zum einen das Fahrzeug abbremst, um einen Zusammenstoß z.B. mit einem Fußgänger zu vermeiden, und zudem die Richtung des Fahrzeugs derart beeinflusst, dass das Fahrzeug um den im Weg stehenden Fußgänger herumgeleitet wird, sofern die Verkehrssituation dies zulässt.

Die notwendige Druckaufbaudynamik wird dabei durch die Verwendung des iBoosters (elektromechanischer Bremskraftverstärker) gewährleistet, der nicht nur sehr schnell, sondern auch sehr komfortabel, d.h. mit minimaler Geräuschentwicklung, Bremsdruck aufbauen kann Das unterlagerte ESP-System, es wäre auch ein ABS-System möglich, erlaubt durch radspezifische Eingriffe, d.h. Schließen der Einlassventile und ggf. Öffnen der Auslassventile, die Aufprägung eines unsymmetrischen Bremsmoments.

Wird von der zur Verfügung stehenden Sensorik erkannt, dass ein Zusammenprall mit einem Fußgänger unmittelbar bevorsteht, so wird durch den iBooster aktiv Druck aufgebaut, um das Fahrzeug zu verzögern, und wenn möglich noch vor dem Fußgänger zum Stillstand zu bringen.

Ist dies nicht mehr möglich, kann anhand der Umgebungssensorik ein so genannter Ausweichkorridor ermittelt werden, um das Fahrzeug um den Fußgänger herum zu steuern. Diese berechnete Trajektorie des Fahrzeugs kann nun durch Einstellen eines rechts/links unsymmetrischen Bremsmoments umgesetzt werden, und zwar so, dass der Druckaufbau durch den iBooster, die Asymmetrie durch die Komponenten des ESP/ABS erzeugt wird. Eine Ansteuerung der Rückförderpumpe ist nicht notwendig.

Zusätzlich können auch andere aktive Elemente des Fahrzeugs, wie Lenkung, zur Richtungsänderung des Fahrzeugs verwendet werden.

Vorzugsweise erzeugt die Sensoreinrichtung Signale auf Grundlage einer Erfassung eines Objektes mit Hilfe einer Radar-Einrichtung und/oder einer Ultraschall-Einrichtung und/oder einer Bildaufnahme-Einrichtung und leitet diese weiter, wobei die Sensoreinrichtung einen oder mehrere dreidimensionale Kollisionsbereiche überwacht, welche einzeln oder zusammen das Gesamt-Umfeld des Fahrzeuges überdecken. Somit ist eine Erfassung von potentiellen Kollisionsobjekten durch die Sensoreinrichtung gewährleistet.

Erfindugsgemäß wird ein Hydraulikfluid-Druckaufbau im Bremssystem im Wesentlichen mit Hilfe des Bremskraftverstärkers erzeugt, und zwar in Antwort auf Signale von der Sensoreinrichtung bei Erfassung eines Objektes. Mit Hilfe des elektromechanischen Bremskraftverstärkers lässt sich, wie oben schon erwähnt, ein relativ höherer Hydraulikfluid-Druckaufbau im Bremssystem erzielen.

Weiterhin wird bevorzugt, dass bei Aktivierung des Bremssystems in Antwort auf Signale von der Sensoreinrichtung die Bremskraft-regelnden Komponenten jeweils ein Bremsmoment an mit Fahrzeugrädern gekoppelten Radbremszylindern erzeugen, wobei das jeweilige Bremsmoment an den Fahrzeugrädern individuell von der Steuereinrichtung in Abhängigkeit von einer durch die Sensoreinrichtung ermittelten Situation erzeugt wird. Dadurch kann die Fahrtrichtung des Fahrzeuges bei Erkennen einer bevorstehenden Kollision entsprechend beeinflusst werden.

Vorteilhafterweise umfassen die weiteren aktiven Fahrwerkskomponenten wenigstens eine Fahrzeug-Lenk-Einrichtung, auf welche die Steuereinrichtung in Antwort auf Signale von der Sensoreinrichtung zur Vermeidung einer Kollision in regelnder Weise einwirkt, wodurch weitere unterstützende Möglichkeiten zur Kollisionsvermeidung gegeben sind.

Weiterhin wird bevorzugt, dass zu jedem Zeitpunkt, während dem das Kollisionsvermeidungsverfahren eine Fahrzeugbewegung aktiv regelt, der Fahrer die Möglichkeit hat, das Fahrzeug auf normale Weise zu betreiben, d.h. das System zur Kollisionsvermeidung zu überstimmen.

Außerdem wird bevorzugt, dass der Fahrer beim Betreiben des Fahrzeuges durch das Kollisionsvermeidungsverfahren zur Verhinderung einer Kollision aktiv unterstützt wird, beispielsweise durch einen automatischen Eingriff in die Lenkung.

Schließlich wird noch bevorzugt, dass der Fahrer beim Betreiben des Fahrzeuges durch das Kollisionsvermeidungsverfahren unterstützt wird, und zwar maximal bis zu einem vom Fahrer vorgegebenen Schwellenwert. Dies ist insbesondere bei Vorhandensein einer Fahrgeschwindigkeitskontrolle (Tempomat bzw. ACC) von Vorteil, um eine eingestellte Geschwindigkeit trotz Einleitung des Kollisionsvermeidungsverfahrens zu halten.

Vorzugsweise ist das Kollisionsvermeidungsverfahren vom Fahrer zu- oder abschaltbar, um dem Fahrer die Entscheidung zu überlassen, das Kollisionsvermeidungsverfahren bewusst zu nutzen oder nicht.

### Kurze Beschreibung der Zeichnungen

Nachfolgend wird die Erfindung anhand von Ausführungsformen in Verbindung mit den Figuren erläutert, wobei:
- Figur 1: eine schematische beispielhafte Anordnung eines herkömmlichen Bremssystems zeigt;
- Figur 2a: beispielhafte Diagramme von Hydraulikfluiddrücken zeigt, und zwar jeweils in zeitlicher Abhängigkeit für ein herkömmliches Bremssystem ohne elektromechanischen Bremskraftverstärker, einschließlich dazugehöriger Darstellungen von Betriebszuständen von wesentlichen Komponenten des herkömmlichen Bremssystems;
- Figur 2b: Diagramme von Hydraulikfluiddrücken zeigt, und zwar jeweils in zeitlicher Abhängigkeit für ein Bremssystem mit elektromechanischem Bremskraftverstärker, einschließlich dazugehöriger Darstellungen von Betriebszuständen von wesentlichen Komponenten des Bremssystems;
- Figur 3: eine Detailansicht der Bremssystem-Anordnung aus Figur 1 zum besseren Verständnis zeigt;
- Figur 4a: eine Detailansicht der Bremssystem-Anordnung aus Figur 1 zum besseren Verständnis zeigt;
- Figur 4b: Druckverlauf-Diagramme von wesentlichen BremssystemKomponenten zeigt, und zwar jeweils in zeitlicher Abhängigkeit, zur besseren Erläuterung der in Figur 4a dargestellten Abläufe;
- Figur 5a: eine schematische Darstellung einer Draufsicht auf zeitlich aufeinander folgende Fahrsituationen zeigt; und
- Figur 5b: den in Figur 5a dargestellten Fahrsituationen entsprechende Fahrzeug-Betriebszustände mit angedeuteten Bewegungsrichtungen des gesamten Fahrzeuges zeigt.

### Ausführungsformen der Erfindung

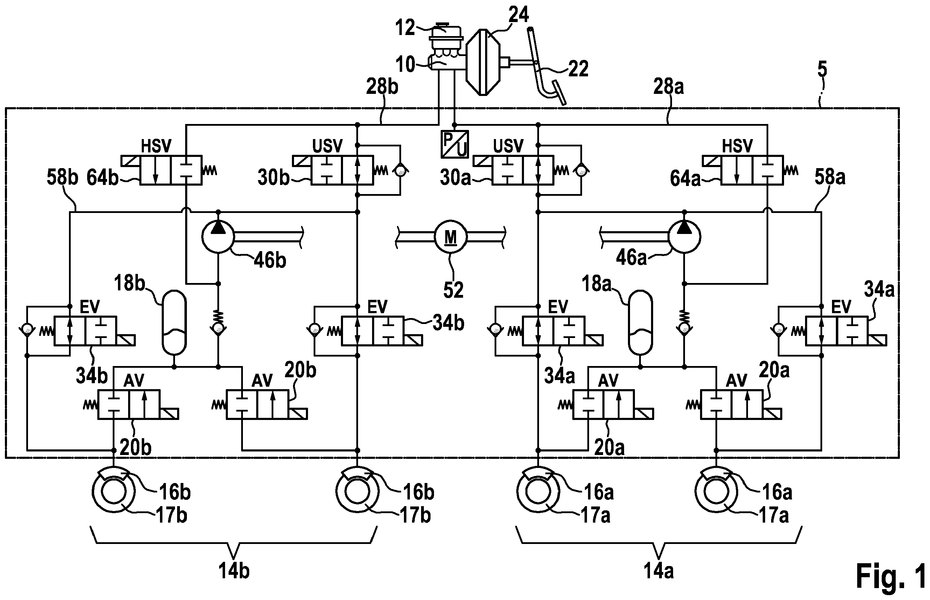

Figur 1 zeigt zum besseren Verständnis der vorliegenden Erfindung eine schematische Darstellung eines an sich bekannten herkömmlichen Bremssystems 5 (hervorgehoben durch eine strich-punktierte Umrandung), weshalb hier darauf nur relativ kurz eigegangen werden soll. Für eine ausführliche Beschreibung des Bremssystems 5 bzw. seiner Funktionsweise sei beispielsweise auf die Druckschrift DE 10 2011 075 983 A1 verwiesen.

Die wesentlichen Komponenten des Bremssystems 5 sind ein Hauptbremszylinder 10, welcher beispielsweise als Tandemhauptbremszylinder ausführbar ist. Das Bremssystem 5 ist jedoch nicht auf die Verwendung eines Tandemhauptbremszylinders beschränkt.

Mit dem Hauptbremszylinder 10 ist ein Hydraulikfluid- (bzw. Bremsflüssigkeits-) Vorratsbehälter 12 fluidisch gekoppelt.

Außerdem ist mit dem Hauptbremszylinder 10 ein elektromechanischer Bremskraftverstärker 24 (ein so genannter "iBooster") gekoppelt. Der Bremskraftverstärker 24 kann insbesondere ein stetig regelbarer/stetig steuerbarer Bremskraftverstärker sein.

Über ein Bremsbetätigungselement 22, welches mit dem Bremskraftverstärker 24 und somit mit dem Hauptbremszylinder 10 gekoppelt ist, kann ein Fahrer des Fahrzeuges eine Bremskraft ausüben, was sich in einer Erhöhung des Hydraulikfluiddrucks im Hauptbremszylinder 10 bzw. damit fluidisch gekoppelten Übertragungsleitungen 28a, 28b auswirkt, wobei der zum Abbremsen des Fahrzeuges aufgebaute erhöhte Fluiddruck über stromlos offene Einlassventile ("EV") 34a, 34a, 34b, 34b an Radbremszylinder 16a, 16a, 16b, 16b übertragen wird, so dass an den Radbremszylindern zugeordneten Rädern 17a, 17a, 17b, 17b jeweils ein Bremsmoment erzeugt wird.

Das in Figur 1 gezeigte Bremssystem 5 weist zwei Bremskreise 14a, 14b auf, wobei die dem Bremskreis 14a zugeordneten Räder 17a, 17a beispielsweise einer Fahrzeugachse (z.B. der Vorderachse) zugeordnet sein können. Entsprechend können die dem Bremskreis 14b zugeordneten Räder 17b, 17b die Räder einer Hinterachse des Fahrzeuges sein. Dabei sind die den Bremskreisen 14a, 14b zugeordneten Komponenten, d.h. zum Beispiel Ventile, in den jeweiligen Bremskreisen analog angeordnet. Es sind aber auch andere Bremskreis-Anordnungen denkbar, wobei beispielsweise Räder eines Bremskreises verschiedenen Achsen zugeordnet sind.

Zum Druckabbau sind in den Bremskreisen 14a, 14b jeweils (stromlos geschlossene) Auslassventile ("AV") 20a, 20a, 20b, 20b mit den Radbremszylindern 16a, 16a bzw. 16b, 16b fluidisch gekoppelt, wobei zum Druckabbau die Auslassventile entsprechend bestromt werden.

Hydraulikfluid kann dann in Druckspeicherelemente 18a, 18b in den Bremskreisen 14a, 14b verschoben werden.

Außerdem weisen die Bremskreise 14a, 14b jeweils ein (stromlos offenes) Umschaltventil 30a, 30b auf, welche bei Bestromung in fluidischer Weise die Bremskreise 14a, 14b vom Hauptbremszylinder 10 abkoppeln können. In diesem Fall kann eine Hydraulikfluid-Druckerhöhung über (Rückförder-) Pumpen 46a, 46b in den Bremskreisen 14a, 14b erzeugt werden, wobei die Pumpen 46a, 46b über einen Motor 52 angetrieben werden, und zwar über vom Motor abgehende und die Pumpen 46a, 46b antreibende Antriebswellen. Die Pumpen 46a, 46b pumpen dann an ihrer Pumpseite (in der Figur 1 mit einem Dreieck gekennzeichnet) jeweils über eine Leitung 58a, 58b unter erhöhtem Druck stehendes Hydraulikfluid in die Radbremszylinder 16a, 16a, 16b, 16b, um jeweils ein Bremsmoment an den zugeordneten Rädern zu erzeugen.

Wenn das in Figur 1 dargestellte Bremssystem 5 als ESP/ABS-System verwendet wird, dann wirken die Pumpen 46a, 46b als selbstsaugende Pumpen, wobei die Umschaltventile 30a, 30b geschlossen sind und Hochdruckschaltventile 64a, 64b, die sonst stromlos geschlossen sind, durch Bestromung geöffnet werden. Somit kann Hydraulikfluid über die Einlassventile 34a, 34a, 34b, 34b an die Radbremszylinder 16a, 16a, 16b, 16b zur Erzeugung von Bremsmomenten an den Rädern 17a, 17a, 17b, 17b übertragen werden. Dabei ist bekannt, dass die Einlassventile getrennt voneinander ansteuerbar sind, um die Räder 17a, 17a, 17b, 17b individuell abzubremsen, um, beispielsweise bei einem ESP-Eingriff, in bestimmten Fahrsituationen so genannte Giermomente zu kompensieren, um das in Fahrt befindliche Fahrzeug zu stabilisieren. Dabei sei bemerkt, dass das Bremssystem 5 in diesem Fall eine X-Bremskreisaufteilung aufweist.

Außerdem sei darauf hingewiesen, dass dargestellte Rückschlagventile aus Gründen der Kürze und da deren Funktion dem Fachmann bekannt ist, nicht näher erläutert sind.

Um nun, gemäß dem Gedanken der vorliegenden Erfindung, das Bremssystem 5 für eine Vermeidung einer Kollision mit beispielsweise einer plötzlich vor dem fahrenden Fahrzeug auftauchenden Person, einem anderen Fahrzeug oder einem sonstigen Objekt, oder allgemein einem Hindernis, zu verwenden, wobei das Hindernis auch stationär sein kann, wird die Funktion des Bremssystems 5 mit der Funktion des elektromechanischen Bremskraftverstärkers 24 kombiniert, wobei die Funktion des Bremssystems 5 (bzw. eine hier nicht dargestellte Steuereinrichtung in Verbindung mit einer Sensoreinrichtung, wie weiter unten noch erläutert wird) dazu dient, die Einlassventile entsprechend der Situation (d.h. Ausweichmanöver) zu steuern, und wobei die Funktion des elektromechanischen Bremskraftverstärkers dazu dient, einen entsprechenden hohen Druck des Hydraulikfluides aufzubauen, was allein mit dem ESP-System hinsichtlich des hohen Druckaufbaus nicht möglich wäre.

Als Sensoreinrichtung (hier nicht dargestellt) kann jede Art von an einer geeigneten Stelle am Fahrzeug befestigtem bzw. angebrachtem Sensor bzw. Sensoren dienen, wie zum Beispiel auf Grundlage einer Radar-, Ultraschall-, Infrarot- und/oder Bild-gebenden Einrichtung bzw. Einrichtungen. Dabei ist denkbar, dass die Sensoreinrichtung bzw. Sensoreinrichtungen das gesamte Umfeld des Fahrzeuges erfassen, vorzugsweise in dreidimensionaler Weise, oder auch nur bestimmte so genannte Kollisionsbereiche, wie zum Beispiel einen Bereich vor dem Fahrzeug und/oder seitlich davon. Wie dem Fachmann bekannt sein dürfte, können sich mehrere Kollisionsbereiche dabei teilweise überdecken, um "Lücken" in der Erfassung zu vermeiden.

Die wenigstens eine Sensoreinrichtung übermittelt bei Erfassung eines oder mehrerer Hindernisse (Personen, Fahrzeuge, oder allgemein Objekte), welche bei normaler Weiterfahrt des Fahrzeuges zu einer Kollision mit dem Fahrzeug führen würden, ein bzw. mehrere Signale an eine im Fahrzeug befindliche Steuereinrichtung. Die Steuereinrichtung berechnet dann auf Grundlage Fahrzeug-spezifischer Daten, wie zum Beispiel Momentangeschwindigkeit, Beschleunigung/ Verzögerung, Fahrtrichtung (beispielsweise auf Grundlage von GPS-Daten ermittelt), eingeschlagene Lenkrichtung, Beschaffenheit des Fahrbahnbelags (beispielsweise nass/trocken) usw. sowie auf Grundlage der Position bzw. Trajektorie (bei sich bewegenden Hindernissen) relativ zum Fahrzeug einen möglichen Kollisionsort, um das Fahrzeug durch entsprechende Ansteuerung des Bremssystems um das Hindernis herum steuern und/oder abbremsen zu können, so dass es nicht zu einer Kollision kommen kann. Dabei ist auch denkbar, dass die Steuereinrichtung Eingriffe in die Lenkung (sozusagen als unterstützende Lenkhilfe), Differentialgetriebe, aktive Fahrwerke (z.B. hinsichtlich Federung, Stoßdämpfer, Stabilisatoren usw.), aber auch Eingriffe in den Antrieb selbst vornimmt, beispielsweise durch Absenken des Motordrehmoments, Reduzieren/ Abschalten der Kraftstoffzufuhr, Ändern des Getriebegangs usw.

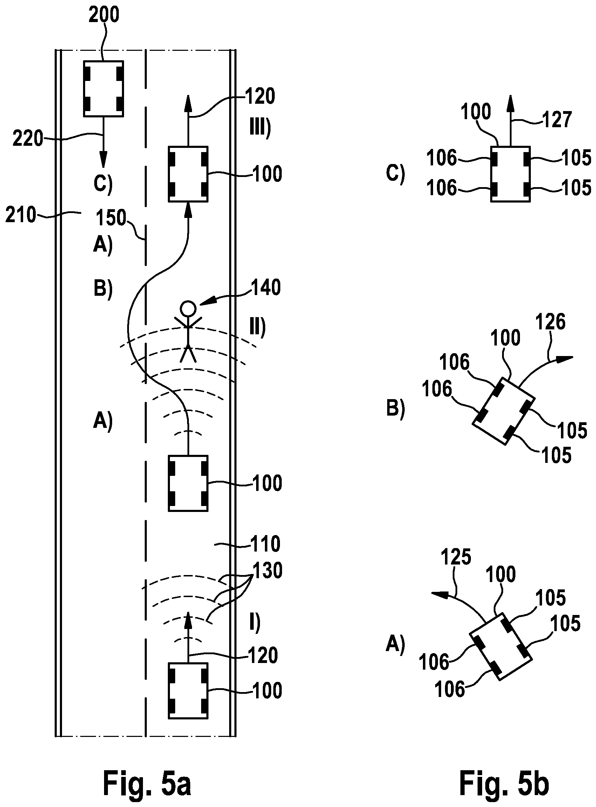

Mit Bezug auf Figuren 5a und 5b soll eine typische Ausweich-Manöver-Situation erläutert werden, bevor mit Bezug auf die übrigen Figuren die Funktion der wesentlichen Komponenten erläutert wird.

Figur 5a zeigt in einer Draufsicht ein Fahrzeug 100, welches sich auf einer Fahrbahn 110 in Richtung des Pfeiles 120 bewegt. In einer ersten Stufe I) sensiert die (hier nicht gezeigte) Sensoreinrichtung des Fahrzeuges 100 die Umgebung vor dem Fahrzeug 100, angedeutet durch "Sensierwellen" 130. Dabei wird noch kein Hindernis sensiert. In einer zweiten Stufe II) wird eine Person 140 sensiert, welche sich in der Fahrtrichtung vor dem Fahrzeug 100 befindet. Aufgrund dessen veranlasst die Steuereinrichtung im Fahrzeug 100 auf Grundlage der empfangenen Signale einen Betriebszustand A) des Fahrzeuges 100. In Figur 5b ist dieser Betriebszustand A) dadurch gekennzeichnet, dass das Bremssystem derart durch Erzeugen entsprechender Bremsmomente auf die Räder 105 des Fahrzeuges 100 einwirkt, dass das Fahrzeug 100 der Richtung des Pfeiles 125 folgt. Dabei ist in Zustand A) das Bremsmoment auf die Räder 105, 105 (d.h. die Räder auf der rechten Seite des Fahrzeuges 100, mit Bezug auf die Fahrtrichtung in Richtung des Pfeiles 125) relativ niedriger als das Bremsmoment auf die Räder 106, 106, so dass das Fahrzeug nach links ausweicht (also in Richtung des Pfeiles 125). Das Fahrzeug 100 wird automatisch durch entsprechenden Eingriff in das Bremssystem am Hindernis 140 vorbeigeführt. Dabei ist natürlich denkbar, dass die oben erwähnten Eingriffe (Lenkung usw.) zusätzlich vorgenommen werden.

Da sich das Fahrzeug 100 nun teilweise oder ganz auf der Fahrspur 210 für den Gegenverkehr befindet (dargestellt durch ein Fahrzeug 200, welches sich in Richtung des Pfeiles 220 bewegt), veranlasst die Steuereinrichtung einen Betriebszustand B) des Fahrzeuges 100, bei welchem das Bremsmoment für die Räder 105, 105 (rechte Fahrzeugseite) relativ höher ist als für die Räder 106, 106 (linke Fahrzeugseite), so dass das Fahrzeug 100 insgesamt der Richtung des Pfeiles 126 folgt (siehe Figur 5b), also wieder zurück auf die ursprüngliche Fahrspur 110. Dabei kann die Steuereinrichtung so ausgelegt sein, dass allein aufgrund der Tatsache (ermittelt durch die Sensoreinrichtung, beispielsweise anhand der Fahrbahnmarkierungen 150, 150), dass sich das Fahrzeug 100 auf der Gegenfahrbahn 210 befindet, der Betriebszustand B) herbeigeführt wird. Natürlich kann auch das im Kollisionsbereich des Fahrzeuges 100 befindliche Fahrzeug 200 (welches durch die Sensoreinrichtung erfasst werden kann) Anlass für die Herbeiführung des Betriebszustands B) sein.

Damit das Fahrzeug 100 nach dem Zustand B) ("Rechtskurve") sich wieder entlang der Fahrspur 110 bewegt, wird wieder ein Zustand A) veranlasst, so dass das Fahrzeug 100 bei Stufe III) zu einem Zustand C) kommt, wo die Bremsmomente an allen Rädern 105, 105, 106, 106 wieder symmetrisch sind, so dass das Fahrzeug 100 wieder der durch den Pfeil 120 angedeuteten Richtung folgt (siehe Figur 5a).

An dieser Stelle sei noch kurz auf weitere Ausführungsformen eingegangen:
Es sollte für den Fahrer immer die Möglichkeit bestehen, das System zu überstimmen, d.h. es sollte trotz eingeleiteter Kollisionsvermeidung für den Fahrer möglich sein, selbst zu beschleunigen bzw. zu bremsen.

Bei Vorhandensein einer eingeschalteten adaptiven Fahrgeschwindigkeitkontrolle (ACC) kann eine Kollisionsvermeidung zwar eingeleitet werden, aber das aufgebaute Bremsmoment wird durch Anheben des Motordrehmoments kompensiert, so dass das Fahrzeug nicht verzögert, sondern der Fahrervorgabe (z.B. Gaspedalstellung, Geschwindigkeitsvorgabe durch ACC) folgt.

Eine weitere Ausführungsform sieht vor, dass die Kollisionsvermeidung eingeleitet wird und das aufgebaute Bremsmoment derart verteilt wird, dass das Fahrzeug nur entsprechend der Fahrervorgabe verzögert, unter Umständen durch Anheben des Motordrehmoments, falls der Fahrer nur relativ leicht auf der Bremse "steht".

Weiterhin ist es denkbar, wie oben schon erwähnt, dass die Kollisionsvermeidungsfunktion durch den Fahrer zu- oder abschaltbar wäre.

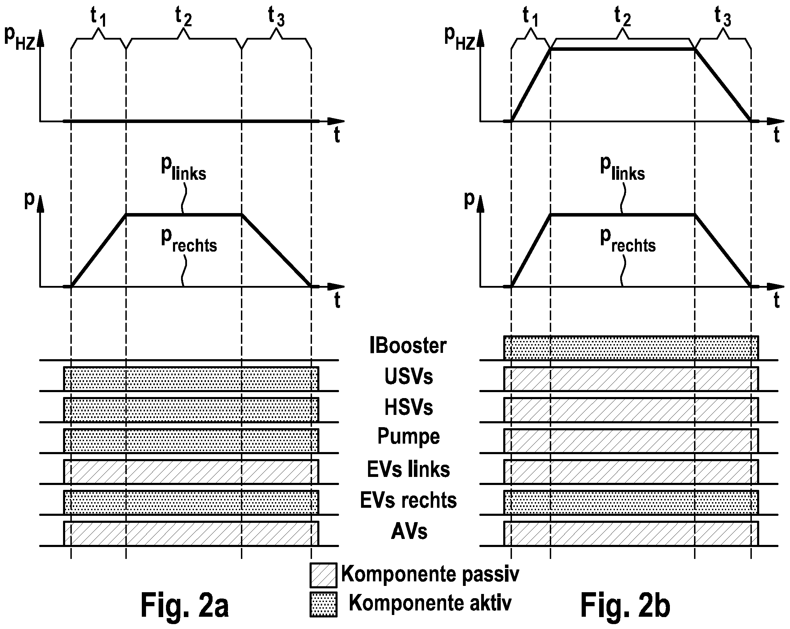

Figuren 2a und 2b zeigen im Vergleich (schematisch bzw. qualitativ dargestellte) zeitliche Druckverläufe eines Drucks im Hauptzylinder an, d.h. p_{HZ}(t), und zwar für herkömmliche Systeme ohne elektromechanischen Bremskraftverstärker (Figur 2a oberes Diagramm), und bei Verwendung eines elektromechanischen Bremskraftverstärkers (iBoosters, Figur 2b oberes Diagramm). Dabei ist zu erkennen, dass im oberen Diagramm in Figur 2a der Druck im Hauptzylinder (Vordruck) null ist, wohingegen in Figur 2b der entsprechende Druck bei Verwendung eines elektromechanischen Bremskraftverstärkers zunächst ansteigt (Zeitfenster t₁), dann konstant auf einem entsprechenden Niveau verbleibt (Zeitfenster t₂), um dann wieder auf null abzufallen (Zeitfenster t₃). Die Zeitfenster t₁, t₂, t₃ sind, wie durch die unterhalb der Diagramme dargestellten Balken, charakterisiert durch eine Betätigungsdauer entsprechender Komponenten, z.B. Hauptschaltventile ("HSVs") offen während t₁, oder "Pumpe an" während t₁ (siehe Figur 2a). Schraffierte Balken bedeuten dabei eine passive Komponente (d.h. Einlassventile links offen), während punktierte Balken eine aktive Komponente bedeuten (d.h. Einlassventile rechts geschlossen bzw. iBooster aktiv, Figur 2b). Die Auslassventile "AVs" sind jeweils geschlossen. Während t₂ und t₃ können in Figur 2a die Hauptschaltventile ("HSVs") optional offen sein, bzw. die Pumpen (Figur 2a) optional eingeschaltet sein.

In den mittleren Diagrammen in Figuren 2a und 2b ist jeweils der Bremsdruck für die linke Fahrzeugseite pₗᵢₙₖₛ und für die rechte Fahrzeugseite p_{rechts} dargestellt, analog zu den in Figuren 5a und 5b gezeigten Betriebszuständen A) und B).

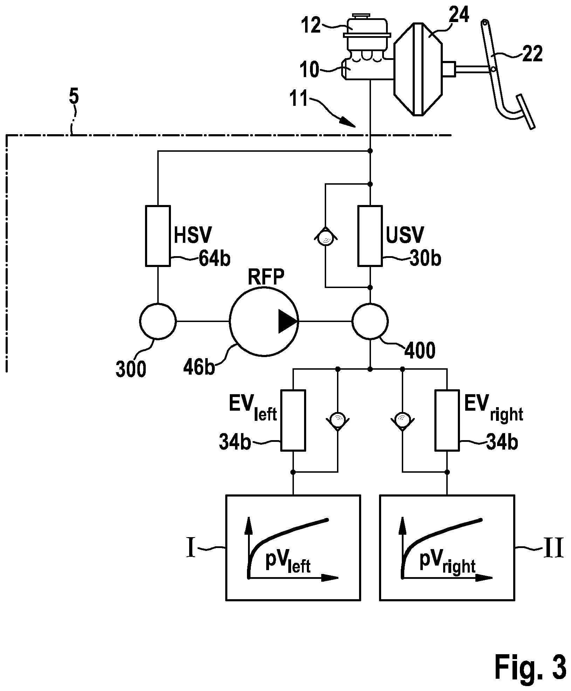

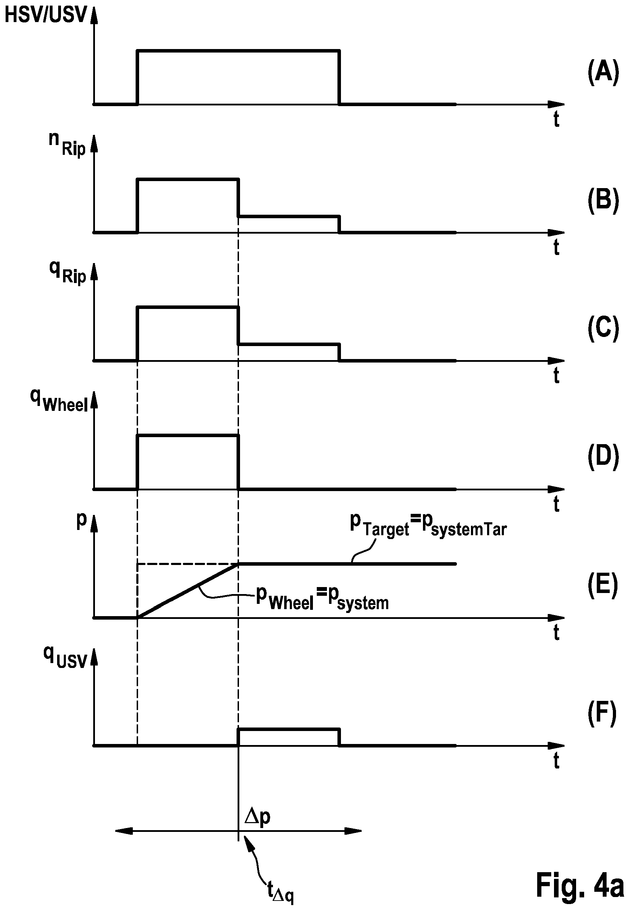

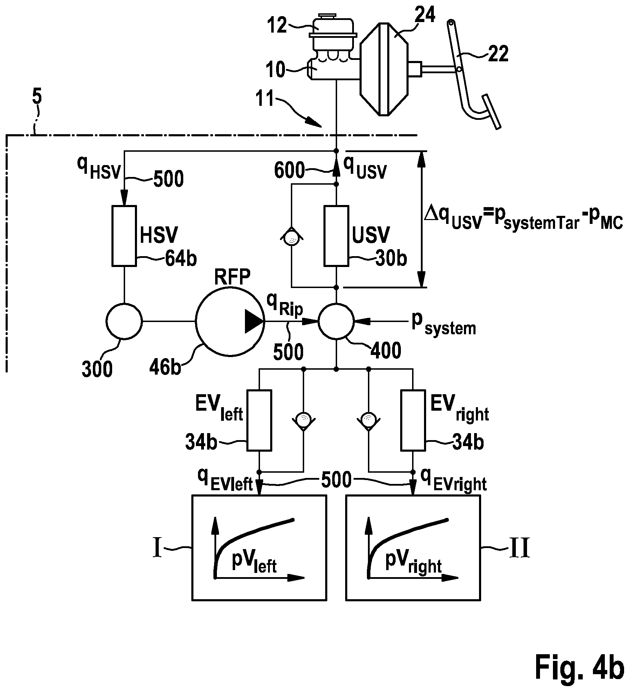

Dem besseren Verständnis der dargestellten Ausführungsform der Erfindung dienend zeigen Figuren 3 sowie 4a und 4b jeweils eine Detailansicht des Bremssystems 5 mit Bremsbetätigungselement 22, Vorratsbehälter 12, Hauptzylinder 10, Hochdruckventil 64b (zwischen zwei Zuständen schaltbar), Umschaltventil 30b (steuerbar), Pumpe 46b (steuerbar), sowie Einlassventile 34b, 34b, welche für das linke und rechte Rad steuerbar sind. Bezugszeichen 300 bezeichnet das Vorkammer-Hydraulikfluidvolumen zwischen dem Hochdruckschaltventil 64b und der (Rückförder-) Pumpe 46b. Bezugszeichen 400 bezeichnet das Hydraulikfluid-Systemvolumen zwischen dem Umschaltventil 30b und den beiden Einlassventilen 34b, 34b.

Die Diagramme I und II sollen allgemein ein Druck/Volumen-Verhältnis angeben, welches jeweils für das linke bzw. rechte Einlassventil 34b, 34b Kunden-spezifisch auslegbar ist. Bezugszeichen 11 bezeichnet eine Saugleitung zwischen dem Hauptzylinder 10 und dem Bremssystem 5 (der Hydraulikeinheit). Die Auslassventile bzw. Druckspeicher sind hierbei der Einfachheit halber nicht dargestellt.

Figur 4b zeigt die in Figur 3 dargestellte Detailansicht des Bremssystems 5, ergänzt um die Volumen-Strömungsrichtungen des Hydraulikfluides.

Figur 4a zeigt dazugehörigen (schematisch bzw. qualitativ dargestellten) zeitlichen Verläufe (A) bis (F), und zwar der Betriebszustände (EIN/AUS) von Hochdruckschaltventil HSV und Umschaltventil USV [Diagramm (A)], der Drehzahl n_{Rfp} der Rückförderpumpe Rfp (46b) [Diagramm (B)], der Volumen-Strömungsrate q_{Rfp} (in mLiter/Sekunde) der Rückförderpumpe (46b) [Diagramm (C)], der Volumen-Strömungsrate q_{Wheel} zu einem Radbremszylinder bzw. Einlassventil [Diagramm (D)] 34b, des Bremsdrucks p sowie der Volumen-Strömungsrate q_{USV} des Umschaltventils 30b.

In Figur 4b ist die Situation dargestellt, wo ein Druckaufbau für die Erzeugung von Bremsmomenten (siehe pV-Diagramme I und II) abläuft, und zwar anhand der mit Bezugszeichen 500 gekennzeichneten Richtungspfeile für q_{HSV}, q_{Rfp}, q_{EVleft} (Einlassventil für linkes Rad) und q_{EVright} (Einlassventil für rechtes Rad). Das Umschaltventil 30b dient hierbei als Überdruckventil, wobei der mit Bezugszeichen 600 gekennzeichnete Richtungspfeil für q_{USV} zurück zum Hauptzylinder 10 strömendes Hydraulikfluid darstellen soll.

In Figur 4a ist bezogen auf die Diagramme (A) bis (F) erkennbar, und zwar insbesondere mit Bezug auf Diagramm (F), dass eine Steuerung des Bremsdrucks erst ab einem Zeitpunkt t_{Δp} stattfindet, d.h. erst, wenn q_{USV} ungleich null ist.

Es sei noch bemerkt, dass die dargestellten Dimensionen nicht notwendigerweise maßstabsgetreu sind.

## Patentansprüche

1. Kollisionsvermeidungsverfahren zur Vermeidung einer Kollision eines sich bewegenden Fahrzeuges (100) mit wenigstens einem Objekt (140), welches in einen möglichen Kollisionsbereich während der Fahrzeugbewegung eintritt und/oder sich befindet, wobei das Fahrzeug (100) umfasst:
- eine Sensoreinrichtung zur Erfassung des wenigstens einen Objektes (140), wobei die Sensoreinrichtung wenigstens einen Kollisionsbereich überwacht, welcher sich im Umfeld des Fahrzeuges (100) befindet;
- einen elektromechanischen Bremskraftverstärker (24);
- ein Fahrzeug-Bremssystem (5) zum Abbremsen des Fahrzeuges (100) umfassend Radbremszylinder (16a, 16b), Radeinlassventile (34a, 34b) und Radauslassventile (20a, 20b) als mit dem elektromechanischen Bremskraftverstärker (24) über ein Hydraulikfluid gekoppelte Bremskraft-regelnde Komponenten; und
- eine Steuereinrichtung, welche Signale von der Sensoreinrichtung empfängt, und auf Grundlage dieser Signale den elektromechanischen Bremskraftverstärker (24), die Radeinlassventile (34a, 34b) und die Radauslassventile (20a, 20b) steuert;
**dadurch gekennzeichnet, dass** das Kollisionsvermeidungsverfahren bei Erfassen des wenigstens einen Objektes (140) eine Fahrgeschwindigkeit und eine Fahrtrichtung des Fahrzeugs (100) ändert, indem in Antwort auf Signale der Sensoreinrichtung bei Erfassung des wenigstens einen Objektes (140) mittels des elektromechanischen Bremskraftverstärkers (24) ein Hydraulikfluid-Druckaufbau im Bremssystem bewirkt wird und durch radspezifisches Ansteuern der Radeinlassventile (34a, 34b) und/oder der Radauslassventile (20a, 20b) ein erstes Gesamt-Bremsmoment auf die Räder (105, 106) auf einer ersten Seite des Fahrzeuges (100) und ein zweites Gesamt-Bremsmoment kleiner als das erste Gesamt-Bremsmoment auf die Räder (105, 106) auf einer zweiten Seite des Fahrzeuges (100) ausgeübt werden, wodurch das Fahrzeug (100) abbremst wird und aufgrund der unsymmetrischen Bremsmomentverteilung am Fahrzeug (100) in die erste Richtung (125, 126) ausweicht, so dass eine Kollision mit dem wenigstens einen Objekt (140) automatisch vermieden wird.

2. Kollisionsvermeidungsverfahren nach Anspruch 1, wobei die Sensoreinrichtung Signale auf Grundlage einer Erfassung des wenigstens einen Objektes (140) mit Hilfe einer Radar-Einrichtung und/oder einer Ultraschall-Einrichtung und/oder einer Bildaufnahme-Einrichtung erzeugt und weiterleitet, wobei die Sensoreinrichtung einen oder mehrere dreidimensionale Kollisionsbereiche überwacht, welche einzeln oder zusammen das Gesamt-Umfeld des Fahrzeuges überdecken.

3. Kollisionsvermeidungsverfahren nach Anspruch 1 oder 2, wobei die Steuereinrichtung in Antwort auf Signale von der Sensoreinrichtung zusätzlich auf wenigstens eine Fahrzeug-Lenk-Einrichtung zur Vermeidung einer Kollision in regelnder Weise einwirkt.

4. Kollisionsvermeidungsverfahren nach einem der vorangehenden Ansprüche, wobei zu jedem Zeitpunkt, während dem das Kollisionsvermeidungsverfahren die Fahrzeugbewegung aktiv regelt, der Fahrer die Möglichkeit hat, das Fahrzeug (100) auf normale Weise zu betreiben.

5. Kollisionsvermeidungsverfahren nach Anspruch 4, wobei der Fahrer beim Betreiben des Fahrzeuges (100) durch das Kollisionsvermeidungsverfahren unterstützt wird.

6. Kollisionsvermeidungsverfahren nach Anspruch 5, wobei der Fahrer beim Betreiben des Fahrzeuges (100) durch das Kollisionsvermeidungsverfahren unterstützt wird, und zwar maximal ab/bis zu einem vom Fahrer vorgegebenen Schwellenwert.

7. Kollisionsvermeidungsverfahren nach einem der vorangehenden Ansprüche, wobei das Kollisionsvermeidungsverfahren vom Fahrer zu- oder abschaltbar ist.

8. Kollisionsvermeidungssystem für ein Fahrzeug (100), umfassend:
- eine Sensoreinrichtung zur Erfassung wenigstens eines Objektes (140), welches in wenigstens einen möglichen Kollisionsbereich während einer Fahrzeugbewegung eintritt und/oder sich befindet, wobei sich der von der Sensoreinrichtung überwachte wenigstens eine Kollisionsbereich im Umfeld des Fahrzeuges (100) befindet;
- einen elektromechanischen Bremskraftverstärker (24);
- ein Fahrzeug-Bremssystem (5) zum Abbremsen des Fahrzeuges (100) umfassend Radbremszylinder (16a, 16b), Radeinlassventile (34a, 34b) und Radauslassventile (20a, 20b) als mit dem elektromechanischen Bremskraftverstärker (24) über ein Hydraulikfluid gekoppelte Bremskraft-regelnde Komponenten; und
- eine Steuereinrichtung, welche Signale von der Sensoreinrichtung empfängt, und auf Grundlage dieser Signale den elektromechanischen Bremskraftverstärker (24), die Radeinlassventile (34a, 34b) und die Radauslassventile (20a, 20b) steuert;
**dadurch gekennzeichnet, dass** das Kollisionsvermeidungssystem bei Erfassen des wenigstens einen Objektes (140) eine Fahrgeschwindigkeit und eine Fahrtrichtung des Fahrzeugs (100) derart ändert, indem in Antwort auf Signale der Sensoreinrichtung bei Erfassung des wenigstens einen Objektes (140) mittels des elektromechanischen Bremskraftverstärkers (24) ein Hydraulikfluid-Druckaufbau im Bremssystem bewirkt wird und durch radspezifisches Ansteuern der Radeinlassventile (34a, 34b) und/oder der Radauslassventile (20a, 20b) ein erstes Gesamt-Bremsmoment auf die Räder (105, 106) auf einer ersten Seite des Fahrzeuges (100) und ein zweites Gesamt-Bremsmoment kleiner als das erste Gesamt-Bremsmoment auf die Räder (105, 106) auf einer zweiten Seite des Fahrzeuges (100) ausgeübt werden, wodurch das Fahrzeug (100) abbremst wird und aufgrund der unsymmetrischen Bremsmomentverteilung am Fahrzeug (100) in die erste Richtung (125, 126) ausweicht, so dass eine Kollision mit dem wenigstens einen Objekt automatisch vermeidbar ist.

9. Kollisionsvermeidungssystem nach Anspruch 8, weiterhin umfassend ein oder mehrere der Merkmale der Ansprüche 2 bis 7.

## Claims

1. Collison avoidance method for avoiding a collision of a moving vehicle (100) with at least one object (140) which enters and/or is located in a possible collision area during the movement of the vehicle, wherein the vehicle (100) comprises:
- a sensor device for sensing the at least one object (140), wherein the sensor device monitors at least one collision area which is located in the surroundings of the vehicle (100);
- an electromechanical brake booster (24);
- a vehicle brake system (5) for braking the vehicle (100) comprising wheel brake cylinders (16a, 16b), wheel inlet valves (34a, 34b) and wheel outlet valves (20a, 20b) as braking-force-controlling components which are coupled to the electromechanical brake booster (24) via a hydraulic fluid; and
- a control device which receives signals from the sensor device and controls the electromechanical brake booster (24), the wheel inlet valves (34a, 34b) and the wheel outlet valves (20a, 20b) on the basis of these signals;
**characterized in that**
when the at least one object (140) is sensed the collision avoidance method changes a travel velocity and a direction of travel of the vehicle (100) by bringing about a build-up of pressure of the hydraulic fluid in the brake system by means of the electromechanical brake booster (24) in response to signals of the sensor device when the at least one object (140) is sensed, and by wheel-specific actuation of the wheel inlet valves (34a, 34b) and/or the wheel outlet valves (20a, 20b) a first overall braking torque is applied to the wheels (105, 106) on a first side of the vehicle (100) and a second overall braking torque less than the first overall braking torque is applied to the wheels (105, 106) on a second side of the vehicle (100), as a result of which the vehicle (100) is braked and moves out in the first direction (125, 126) owing to the asymmetrical braking torque distribution at the vehicle (100), so that a collision with the at least one object (140) is automatically avoided.

2. Collision avoidance method according to Claim 1, wherein the sensor device generates signals on the basis of sensing of the at least one object (140) using a radar device and/or an ultrasonic device and/or an image-recording device and passes them on, wherein the sensor device monitors one or more three-dimensional collision areas which individually or together cover the entire surroundings of the vehicle.

3. Collision avoidance method according to Claim 1 or 2, wherein the control device additionally acts in a controlling fashion, in response to signals from the sensor device, on at least one vehicle-steering device in order to avoid a collision.

4. Collision avoidance method according to one of the preceding claims, wherein at any time during which the collision avoidance method actively controls the movement of the vehicle the driver has the possibility of operating the vehicle (100) in a normal way.

5. Collision avoidance method according to Claim 4, wherein the driver is assisted by the collision avoidance method when operating the vehicle (100).

6. Collision avoidance method according to Claim 5, wherein the driver is assisted by the collision avoidance method when operating the vehicle (100), specifically at a maximum starting from/up to a threshold value predefined by the driver.

7. Collision avoidance method according to one of the preceding claims, wherein the collision avoidance method can be switched on or off by the driver.

8. Collision avoidance method for a vehicle (100) comprising:
- a sensor device for sensing at least one object (140) which enters and/or is located in at least one possible collision area during a movement of the vehicle, wherein the at least one collision area which is monitored by the sensor device is located in the surroundings of the vehicle (100);
- an electromechanical brake booster (24);
- a vehicle brake system (5) for braking the vehicle (100) comprising wheel brake cylinders (16a, 16b), wheel inlet valves (34a, 34b) and wheel outlet valves (20a, 20b) as braking-force-controlling components which are coupled to the electromechanical brake booster (24) via a hydraulic fluid; and
- a control device which receives signals from the sensor device and controls the electromechanical brake booster (24), the wheel inlet valves (34a, 34b) and the wheel outlet valves (20a, 20b) on the basis of these signals;
**characterized in that**
when the at least one object (140) is sensed the collision avoidance system changes a travel velocity and a direction of travel of the vehicle (100) in such a way by bringing about a build-up of pressure of the hydraulic fluid in the brake system by means of the electromechanical brake booster (24) in response to signals of the sensor device when the at least one object (140) is sensed, and by wheel-specific actuation of the wheel inlet valves (34a, 34b) and/or the wheel outlet valves (20a, 20b), a first overall braking torque is applied to the wheels (105, 106) on a first side of the vehicle (100) and a second overall braking torque less than the first overall braking torque is applied to the wheels (105, 106) on a second side of the vehicle (100) as a result of which the vehicle (100) is braked and moves out in the first direction (125, 126) owing to the asymmetrical braking torque distribution at the vehicle (100), so that a collision with the at least one object can be automatically avoided.

9. Collision avoidance system according to Claim 8, also comprising one or more of the features of Claims 2 to 7.

## Revendications

1. Procédé d'évitement de collisions, destiné à éviter une collision d'un véhicule (100) en déplacement avec un ou plusieurs objets (140) qui pénètrent et/ou sont situés dans une zone de collision possible pendant le déplacement du véhicule, le véhicule (100) comprenant :
un dispositif de capteurs destiné à détecter le ou les objets (140), le dispositif de capteur surveillant au moins une zone de collision située dans l'environnement du véhicule (100),
un amplificateur électromécanique (24) de force de freinage,
un système (5) de frein du véhicule destiné à freiner le véhicule (100), comprenant un cylindre (16a, 16b) de frein de roue, des soupapes (34a, 34b) d'admission de roue et des soupapes (20a, 20b) de sortie de roue comme composants régulant la force de freinage et accouplés par l'intermédiaire d'un fluide hydraulique à l'amplificateur électromécanique (24) de force de freinage et
un dispositif de commande qui reçoit des signaux du dispositif de capteurs et qui, sur la base de ces signaux, commande l'amplificateur électromécanique (24) de force de freinage, les soupapes (34a, 34b) d'admission de roue et les soupapes (20a, 20b) de sortie de roue,
**caractérisé en ce que**
en cas de détection du ou des objets (140), le procédé d'évitement de collisions modifie une vitesse de déplacement et une direction de déplacement du véhicule (100) en provoquant l'établissement d'une pression de fluide hydraulique dans le système de freinage au moyen de l'amplificateur électromécanique (24) de force de freinage en réponse à des signaux du dispositif de capteurs lors de la détection du ou des objets (140) et, par commande spécifique à chaque roue des soupapes (34a, 34b) d'admission de roue et/ou des soupapes (20a, 20b) de sortie de roue, en appliquant un premier couple global de freinage sur les roues (105, 106) d'un premier côté du véhicule (100) et un deuxième couple global de freinage, plus petit que le premier couple global de freinage, sur les roues (105, 106) d'un deuxième côté du véhicule (100), grâce à quoi le véhicule (100) est freiné et, du fait de la répartition asymétrique du couple de freinage au niveau du véhicule, dévie (100) dans la première direction (125, 126) de manière à éviter automatiquement une collision avec le ou les objets (140).

2. Procédé d'évitement de collisions selon la revendication 1, dans lequel sur la base d'une détection du ou des objets (140), le dispositif de capteurs génère et transmet des signaux à l'aide d'un dispositif radar et/ou d'un dispositif à ultrasons et/ou d'un dispositif d'enregistrement d'image, le dispositif de capteurs surveillant une ou plusieurs zones tridimensionnelles de collision qui couvrent séparément ou ensemble l'environnement global du véhicule.

3. Procédé d'évitement de collisions selon la revendication 1 ou 2, dans lequel, en réponse aux signaux du dispositif de capteurs, le dispositif de commande agit de plus de manière régulante sur au moins un dispositif de direction du véhicule en vue d'éviter une collision.

4. Procédé d'évitement de collisions selon l'une des revendications précédentes, dans lequel à chaque instant auquel le procédé d'évitement de collisions régule activement le déplacement du véhicule, le conducteur a la possibilité de faire fonctionner le véhicule (100) de manière normale.

5. Procédé d'évitement de collisions selon la revendication 4, dans lequel le conducteur est soutenu par le procédé d'évitement de collisions lors du fonctionnement du véhicule (100).

6. Procédé d'évitement de collisions selon la revendication 5, dans lequel le conducteur est soutenu par le procédé d'évitement de collisions lors du fonctionnement du véhicule (100) et ce au plus jusqu'à ou à partir d'une valeur de seuil prédéterminée par le conducteur.

7. Procédé d'évitement de collisions selon l'une des revendications précédentes, dans lequel le procédé d'évitement de collisions peut être branché ou débranché par le conducteur.

8. Système d'évitement de collisions pour un véhicule (100), le système comprenant :
un dispositif de capteurs destiné à détecter le ou les objets (140) qui pénètrent et/ou sont situés dans au moins une zone de collision possible pendant un déplacement du véhicule, la ou les zones de collision surveilées par le dispositif de capteurs étant situées dans l'environnement du véhicule (100),
un amplificateur électromécanique (24) de force de freinage,
un système (5) de frein du véhicule destiné à freiner le véhicule (100), comprenant un cylindre (16a, 16b) de frein de roue, des soupapes (34a, 34b) d'admission de roue et des soupapes (20a, 20b) de sortie de roue comme composants régulant la force de freinage et accouplés par l'intermédiaire d'un fluide hydraulique à l'amplificateur électromécanique (24) de force de freinage et
un dispositif de commande qui reçoit des signaux du dispositif de capteurs et qui, sur la base de ces signaux, commande l'amplificateur électromécanique (24) de force de freinage, les soupapes (34a, 34b) d'admission de roue et les soupapes (20a, 20b) de sortie de roue,
**caractérisé en ce que**
en cas de détection du ou des objets (140), le procédé d'évitement de collisions modifie une vitesse de déplacement et une direction de déplacement du véhicule (100) en provoquant l'établissement d'une pression de fluide hydraulique dans le système de freinage au moyen de l'amplificateur électromécanique (24) de force de freinage en réponse à des signaux du dispositif de capteurs lors de la détection du ou des objets (140) et, par commande spécifique à chaque roue des soupapes (34a, 34b) d'admission de roue et/ou des soupapes (20a, 20b) de sortie de roue, en appliquant un premier couple global de freinage sur les roues (105, 106) d'un premier côté du véhicule (100) et un deuxième couple global de freinage, plus petit que le premier couple global de freinage, sur les roues (105, 106) d'un deuxième côté du véhicule (100), grâce à quoi le véhicule (100) est freiné et, du fait de la répartition asymétrique du couple de freinage au niveau du véhicule, dévie (100) dans la première direction (125, 126) de manière à pouvoir éviter automatiquement une collision avec le ou les objets.

9. Système d'évitement de collisions selon la revendication 8, comprenant en outre une ou plusieurs des caractéristiques des revendications 2 à 7.
